# EUROPEAN PATENT APPLICATION

(11) **EP 4 837 937 A1**
(43) Date of publication of application: **11.11.2026**
(21) Application number: 25174313.4
(22) Date of filing: 05.05.2025
(51) Int. Cl.: C09D 1/00, C09D 5/02, C09D 7/61, C09D 7/40, D21H 19/38, D21H 19/40, D21H 19/66, B41M 5/50

(54) **SHEET FOR PRINTING HAVING A METALLIC LUSTER**

(71) Applicant: Neenah Red Bridge International Limited, Bolton BL2 5PD (GB)
(72) Inventor: MOTAWE, Mohammad, ALPHARETTA, 30009 (US)
(74) Representative: Plasseraud IP

(57) **Abstract**

The present disclosure provides a sheet for printing comprising a substrate sheet comprising a first and second main surfaces, and an outer coating layer on at least one of the first and second main surfaces, wherein said outer coating layer comprises mica particles, and fumed alumina particles. The sheet for printing of the present disclosure provides a substrate with a metallic luster allowing a high quality of printing, especially in inkjet printing with water-based inks.

## Description

### Technical Field

The present disclosure relates generally to sheets for printing, such as paper, having a metallic luster.

### Background

Sheets for printing which incorporate a metallic visual effect, often based on paper or nonwoven materials, are used in digital printing processes to impart metallic, glittery, or iridescent appearance while maintaining functional performance. Coatings designed to impart a metallic sheen are generally applied to provide reflective characteristics while maintaining compatibility with various printing techniques. This involves the integration of specialized particles into a formulation that aim to control the visual presentation of printed articles while meeting the technical requirements of rapid printing processes.

Such sheets generally comprise a substrate and a coating layer, wherein said coating layer comprises pigments imparting said glittering or iridescent appearance to the paper. Such pigments can be synthetic glitter particles, metallic pigments, mica particles (synthetic or natural, coated or uncoated) and the like.

In numerous applications, particularly in high-speed digital printing, there is a preference for the surface to offer strong ink receptivity and rapid absorption, facilitating the creation of sharply defined images with consistent color distribution. However, current solutions using such sheets for printing are known to interact poorly with the pigments providing the specific appearance to the sheet.

For example, EP1353009A2 relates to a glittering-reflecting sheet paper material comprising at least one glazed surface associated with a layer incorporating a dispersion of granules of a reflecting substance. WO2015181686A1 discloses a substrate at least partially coated with a composition comprising reflecting particles, fumed silica and a binder. US20160355687A1 relates to a printable glitter sheet comprising: a sheet supporter, and a glitter coating layer formed on the sheet supporter. WO2023222572A1 relates to a paper sheet material with a glittering and reflective surface appearance comprising a paper substrate and a treatment layer applied to at least one surface of said paper substrate to impart a glittering and reflective appearance to said surface.

### Summary

Despite the existence of various techniques, there remain significant challenges in meeting stringent printing requirements while preserving the intended luminous appearance of the coated substrate. Many of the existing approaches, although capable of imparting a reflective finish, may encounter issues such as insufficient ink absorption, image blurring, or uneven color distribution when used with water-based inks. These limitations can lead to diminished print quality, particularly in settings where high-speed printing and precise image definition are required.

More specifically, substrates intended for high-speed digital printing applications are required to address problems related to the interaction between the surface layer and water-based inks. In practice, some surfaces that contain metallic particles may yield undesirable effects such as ink reticulation and smudging, which compromise the clarity and durability of the printed image.

Furthermore, maintaining the integrity of the metallic luster throughout the printing process presents an additional challenge, particularly under conditions that promote rapid ink drying or moisture exposure. Consequently, there is a clear need for improved systems that address both the visual demands of a metallic finish and the rigorous functional requirements of modern high-speed printing technologies.

Accordingly, the present disclosure relates to a coating composition and sheets for printing comprising coatings of such coating composition having a metallic luster which address the aforementioned challenges. The coating composition comprises mice and fumed alumina. The sheet for printing comprises a substrate and an outer coating layer comprising the aforementioned coating composition.

The coating composition and sheet for printing comprising said coating composition coated thereon of the present disclosure allows high quality inkjet printing with water-based inks both in terms of the uniformity of the tint obtained and in terms of the definition of the printed images. Moreover, the metallic luster of the sheet for printing of the present disclosure is retained in the printed sheet, even for the printed parts.

It was found that a combination of mica and fumed alumina in the coating composition allows the sheet for printing to obtain these effects.

Furthermore, when printed on, the sheets for printing of the invention have excellent resistance to moisture and can be washed and/or dipped into water thereby keeping the original appearance and physical parameters.

### Description of Embodiments

The present invention provides the following items and embodiments, wherein a coating composition, a sheet for printing, a method of manufacture of a sheet for printing, a printed sheet, and a method of printing are described. The comments applying to features of one of these objects apply mutatis mutandis to the other objects.

The present disclosure provides a coating composition comprising: mica particles, and fumed alumina particles. The combination of mica particles and fumed alumina particles in the coating composition enhances both the printing quality and functional properties of the coating composition when coated on a substrate. The mica particles provide metallic luster and reflective appearance to the coating, creating a visually appealing finish suitable for decorative and high-quality applications.

The inclusion of fumed alumina particles enhances the hydrophilic properties of the coating, allowing for rapid ink absorption and preventing issues such as ink reticulation or smudging during high-speed printing with water-based inks. This ensures high-definition image quality and uniform color distribution, even under demanding printing conditions.

Additionally, the fumed alumina particles, due to their fine particle size and high surface area, fill gaps in the coating composition when coated on a substrate, improving its smoothness and glossiness. This not only amplifies the metallic effect provided by the mica particles but also contributes to the structural integrity and durability of the composition. The resulting coating composition is well-suited for applications requiring both aesthetic appeal and functional performance, such as moisture resistance and mechanical durability.

Fumed alumina also called pyrogenic alumina is a type of particulate alumina. It is produced in a flame comprising oxygen and hydrogen from precursors containing aluminum, which are hydrolyzed in the flame to yield alumina. The precursor may be AlCl₃. Fumed alumina particles are aggregate particles of smaller primary particles, which are held together by relatively strong cohesive forces, such that the aggregate particles do not break down into primary particles when dispersed in a liquid medium.

Mica particles may comprise natural mica and/or synthetic mica and maybe coated or uncoated.

In some examples, the ratio of the mass of the fumed alumina particles in the coating composition to the mass of the mica particles in the coating composition may be equal to or greater than 2, preferably from 2.25 to 4, more preferably from 2.5 to3.5.

It should be understood that the mass of the mica particles and the mass of the fumed alumina are dry masses.

By specifying that the ratio of the mass of the fumed alumina particles to the mass of the mica particles in the coating composition, the coating composition maintains a controlled metallic luster and absorptive properties when coated on a substrate. The higher proportion of fumed alumina particles enhances the hydrophilic properties of the coating, allowing for subsequent rapid ink absorption on the substrate and preventing issues such as ink reticulation or smudging during high-speed printing with water-based inks.

Simultaneously, the controlled ratio ensures that the metallic luster provided by the mica particles is preserved. The fumed alumina particles fill gaps in the coating composition when coated on a substrate, maintaining a smooth and glossy surface that amplifies the reflective and glittering effect of the mica particles. This balance prevents excessive dulling of the metallic appearance while maintaining the functional properties of the coating composition.

In some examples, the coating composition may comprise from 2 to 30% w/w, for example from 16 to 30% w/w of mica particles relative to the total mass of the coating composition. The specified range of mica particle content, from 2 to 30% w/w (for example, from 16 to 30% w/w) relative to the total mass of the coating composition, ensures a controlled and visually appealing metallic luster when coated on a substrate. Within this range, the mica particles provide a controlled, reflective and glittering appearance.

A higher mica content within the specified range intensifies the metallic effect, making the sheet suitable for applications requiring a pronounced visual impact, such as decorative wallpapers. At the same time, the controlled proportion of mica particles prevents excessive interference with the functional properties of the coating composition, such as ink absorption and drying performance. This balance ensures that the metallic luster is retained even after printing on a substrate, including on printed areas, while maintaining high-definition image quality and uniform color distribution. The controlled mica content also contributes to the durability of the resulting coating, ensuring that the metallic appearance remains intact under various environmental conditions, such as exposure to moisture or mechanical handling.

The mica particles may have a D10 equal to or greater than 5 µm and a D90 of equal to or less than 120 µm, preferably a D10 equal to or greater than 7 µm and a D90 of equal to or less than 100 µm, more preferably a D10 of equal to or greater than 9 µm and a D90 of equal to or less than 70 µm.

The D10 of an ensemble of particles is defined as the particle size such that 10% v/v of the particles are below this size.

The D90 of an ensemble of particles is defined as the particle size such that 90% v/v of the particles are below this size.

Thus, for an ensemble of particles having a D10 of 10 µm and a D90 of 60 µm, 80% v/v of the particles have a size between 10 µm and 60 µm.

D10 and D90 are measured by static laser diffraction.

The controlled particle size distribution allows the mica particles to provide a uniform and visually appealing metallic appearance without causing excessive surface roughness, which would otherwise interfere with ink absorption and print quality. Larger particles within the specified range enhance the reflective and glittering effect, while smaller particles contribute to a smoother coating surface when coated on a substrate, improving the overall gloss and compatibility with high-speed inkjet printing.

This particle size distribution also ensures that the mica particles are evenly dispersed within the coating composition, preventing clumping or uneven coverage that could compromise the metallic effect or printing performance. Additionally, the controlled size range supports the durability of the coating composition, ensuring that the metallic luster is retained even after printing and under conditions of mechanical handling, environmental exposure, or submersion in water.

In some examples, the mica particles may be coated mica particles. The use of coated mica particles in the coating composition enhances the metallic luster and visual appeal of the sheet for printing. The coating on the mica particles, typically comprising an interferential layer of another oxide, for example titanium dioxide, amplifies the reflective and glittering properties of the mica, resulting in a more pronounced and vibrant metallic appearance.

This enhancement ensures that the metallic effect remains consistent after printing, including on printed areas. Additionally, the coated mica particles improve the durability of the metallic luster by providing resistance to environmental factors such as moisture.

In some examples, the coating composition may comprise from 4 to 90% w/w, for example from 30 to 90% w/w of fumed alumina particles relative to the total mass of the coating composition.

The specified range of fumed alumina particle content, from 4 to 90% w/w, for example, from 30 to 90% w/w, relative to the total mass of the coating composition, ensures a controlled balance between ink absorption, surface smoothness, and structural integrity of the composition when coated on a substrate.

A higher proportion of fumed alumina particles within this range enhances the hydrophilic properties of the coating composition, allowing for rapid ink absorption and preventing issues such as ink reticulation or smudging during high-speed printing with water-based inks. This ensures high-definition image quality and uniform color distribution of the resulting printed image, even under demanding printing conditions.

Additionally, the fine particle size and high surface area of fumed alumina contribute to filling gaps in the coating composition when coated, improving its smoothness and glossiness. This enhances the overall visual appeal, maintaining the metallic luster provided by the mica particles. The controlled fumed alumina content also ensures the durability of the coating composition, providing resistance to moisture.

In the coating composition of the present disclosure, the fumed alumina particles may have a D50 of equal to or less than 0.3 µm, preferably equal to or less than 0.2 µm, even more preferably equal to or less than 0.15 µm.

The D50 of an ensemble of particles is defined as the particle size such that 50% v/v of the particles are below this size. It is also called the median size.

It should be understood that the D50 mentioned hereabove refers to the size of the aggregate particles and not to the size of the primary particles forming the aggregates particles of fumed alumina. The D50 can be measured by static laser diffraction.

The specified particle size allows the fumed alumina particles to fill microscopic gaps in the coating composition when coated on a substrate, resulting in a smoother and more uniform surface. This smoothness improves the glossiness of the coating composition and enhances the metallic luster provided by the mica particles.

Additionally, the small particle size of the fumed alumina increases the surface area available for ink absorption, enabling rapid drying of water-based inks and preventing issues such as ink reticulation or smudging during high-speed printing. This ensures high-definition image quality and uniform color distribution, even under demanding printing conditions. In some examples, the fumed alumina particles may have a D50 of equal to or greater than 0.07 and equal to or less than 0.3 µm, preferably of equal to or greater than 0.07 and equal to or less than 0.2 µm, even more preferably of equal to or greater than 0.07 and equal to or less than 0.15 µm.

In some examples, the coating composition may further comprise a polymeric binder. For example, binders that can be used include acrylic polymers, polyurethanes, polyvinyl alcohols, polyvinyl acetates, les styrene-butadiene copolymers, polyethylene, and mixtures thereof. In one example, the polymeric binder may comprise an acrylic polymer.

The inclusion of a polymeric binder in the coating composition enhances the structural integrity and adhesion properties of the coating composition. The polymeric binder acts as a matrix that binds the mica particles and fumed alumina particles together, ensuring a uniform distribution of these functional components within the coating composition. This uniformity contributes to the consistent metallic luster and smooth surface finish when coated on a substrate.

Additionally, the polymeric binder improves the mechanical durability of the coating composition, making it resistant to cracking, peeling, or flaking during handling, printing, or post-processing. It also enhances the coating's compatibility with high-speed inkjet printing by providing a stable surface that supports rapid ink absorption and prevents issues such as smudging or reticulation.

The presence of the polymeric binder further contributes to the coating's resistance to environmental factors, particularly moisture, and ensures the coating composition maintains its visual and functional properties when coated on a substrate, over time, even after washing with or submersion in water.

In some examples, the ratio of the mass of the fumed alumina particles in the coating composition to the mass of the polymeric binder in the coating composition may be equal to or greater than 0.5, preferably from 0.75 to 2.0, more preferably from 1 to 1.5. The specified ratio of the mass of the fumed alumina particles to the mass of the polymeric binder in the coating composition ensures a controlled balance between ink absorption, structural integrity, and coating performance.

A higher proportion of fumed alumina particles relative to the polymeric binder enhances the hydrophilic properties of the coating composition when coated on a substrate, allowing for rapid ink absorption and preventing issues such as ink reticulation or smudging during high-speed printing with water-based inks. This ensures high-definition image quality and uniform color distribution, even under demanding printing conditions.

At the same time, maintaining a sufficient amount of polymeric binder ensures that the coating composition retains its adhesive properties. Theis specified binder content provides sufficient structural support, preventing cracking, peeling, or flaking of the composition when coated, during handling, printing, or post-processing.

This specific ratio also contributes to the retention of the metallic luster provided by the mica particles, as the fumed alumina particles fill gaps in the coating composition when coated, maintaining a smooth and glossy surface.

Finally, the specific ratio also contributes to the water resistance of the coating composition when coated on a substrate such that the coated substrate maintains its original appearance after being washed with or submerged in water.

The coating composition may comprise from 4 to 60% w/w, for example from 4 to 50% w/w, for example 4 to 40% w/w of polymeric binder relative to the total mass of the coating composition.

Within this range, the polymeric binder provides sufficient cohesion to bind the mica particles and fumed alumina particles together, ensuring a uniform distribution of these components within the coating composition. This uniformity contributes to the consistent metallic luster and smooth surface finish when coated on a substrate.

Furthermore, the specified binder content supports the coating composition's compatibility with high-speed inkjet printing by maintaining a stable surface when coated on a substrate that facilitates rapid ink absorption and prevents issues such as smudging or reticulation. This balance ensures that the coating composition retains its metallic appearance while delivering high-definition image quality and uniform color distribution, making it suitable for applications such as wallpapers, security document, or labels.

In some examples, the coating composition may be devoid of a polyurethane binder. The absence of a polyurethane binder in the coating composition ensures improved compatibility with water-based inks, which are commonly used in high-speed inkjet printing. By eliminating polyurethane binders, which can sometimes interfere with ink absorption or drying, the coating composition, when coated, achieves enhanced hydrophilic properties, allowing for rapid ink uptake of a substrate coated with the coating composition and preventing issues such as ink reticulation or smudging.

Additionally, the exclusion of polyurethane binders simplifies the formulation of the coating composition, potentially reducing production costs and environmental impact. This also makes the coating composition more suitable for applications requiring recyclability or compliance with stricter environmental regulations.

The absence of polyurethane binders does not compromise the structural integrity or durability of the coating composition when coated on a substrate, as the combination of mica particles, fumed alumina particles, and other polymeric binders ensures sufficient mechanical strength, adhesion, and resistance to wear. This configuration supports high-quality printing with a metallic luster.

In some examples, the coating composition may further comprise a wetting agent. A wetting agent should be understood to refer to a substance that reduces the surface tension of a liquid, allowing it to spread more easily across or penetrate a surface. In the context of coating compositions, wetting agents, for example surfactants, improve the uniform application of the coating composition by enhancing its adhesion to a substrate and preventing defects such as uneven coverage or beading.

The wetting agent may be a silicone-based wetting agent. Silicone-based wetting agents comprise a silicone hydrophobic part (e.g. a polydimethylsiloxane chain) modified with hydrophilic side chains (e.g. comprising oligomers of ethylene glycol and/or propylene glycol). Silicone-based wetting agents are particularly suitable for facilitating the coating of the coating composition on a substrate comprising sheets of paper ply as will be discussed layer in the present disclosure.

The dual hydrophobic-hydrophilic nature of the silicone-based wetting agent also prevents defects such as beading, uneven coverage, or pinholes in the coating composition when coated on a substrate. This results in a smoother and more uniform surface, which is critical for achieving consistent metallic luster and optimal ink absorption during high-speed printing.

Additionally, the ability to deliver improved coating uniformity provided by the silicone-based wetting agent enhances the overall visual appeal and functional performance of the coating composition when coated on a substrate.

In some examples, the coating composition may comprise from 0.2 to 8% w/w, for example from 0.4 to 4% w/w of wetting agent relative to the total mass of the coating composition.

Within this range, the wetting agent effectively reduces the surface tension of the coating composition, improving its ability to spread uniformly across a substrate when coated thereon. This prevents defects such as beading, uneven coverage, or pinholes, resulting in a smoother and more consistent coating composition when coated on a substrate. The improved uniformity enhances the metallic luster provided by the mica particles and supports the ink absorption properties of the fumed alumina particles.

Additionally, the controlled amount of wetting agent ensures that the coating composition maintains its stability and does not compromise the mechanical integrity of the coating composition when coated on a substrate. This balance contributes to high-quality printing results, with sharp image definition and uniform color distribution, while minimizing material waste and production costs.

The wetting agent content also supports the coating composition's compatibility with various substrates, including both paper and nonwoven materials.

In some examples, the dry solids content of the coating composition may be equal to or greater than 20 and equal to or less than 50% w/w relative to the total mass of the coating composition.

The specified dry solids content of the composition ensures a controlled balance between coating performance, application efficiency, and material stability.

Within this range, the solids content provides sufficient material density to achieve a uniform and consistent coating layer when the coating composition is coated on a substrate. This ensures that the mica particles impart a metallic luster while the fumed alumina particles enhance ink absorption and drying performance. The controlled solids content also prevents excessive penetration of the resulting coating into the substrate, maintaining the structural integrity and functional properties of the coating composition when coated.

Additionally, the specified solids content supports efficient application methods, such as bar coating, blade coating, or slot-die coating, by maintaining the appropriate viscosity and flow characteristics of the coating composition. This minimizes material waste and ensures even coverage, contributing to high-quality printing results with sharp image definition and uniform color distribution.

The controlled solids content also enhances the stability of the coating composition during storage and application, reducing the risk of sedimentation or separation of the functional components. This makes the composition suitable for a wide range of applications, including wallpapers, labels, and security documents, where both aesthetic appeal and functional performance are of consequence.

In some examples, the coating composition of the present disclosure may be a water-based composition.

A water-based composition is intended to refer to a composition which comprises water as the main solvent. For example, 90% w/w or 100% w/w of the solvent is water.

The use of a water-based coating composition ensures enhanced environmental sustainability and compatibility with modern printing technologies. Water serves as the primary solvent, reducing the reliance on volatile organic compounds (VOCs) typically found in solvent-based coatings. This minimizes environmental impact and improves workplace safety by reducing harmful emissions during application and drying.

Additionally, the water-based composition enhances compatibility with water-based inks, commonly used in high-speed inkjet printing when the water-based composition is coated on a substrate. This ensures effective ink absorption, rapid drying, and prevention of issues such as ink reticulation or smudging, resulting in high-definition image quality and uniform color distribution.

The water-based nature of the composition also supports ease of application using various coating techniques, such as bar coating, blade coating, or slot-die coating, while maintaining stability and uniformity during storage and application. This makes the coating composition suitable for a wide range of applications, including wallpapers, labels, and security documents, where both environmental considerations and functional performance are of consequence.

In some examples, the pH of the coating composition may be from 3 to 7, for example from 4 to 6.5.

The specified pH range of the coating composition ensures stability and performance of the fumed alumina particles. Fumed alumina exhibits increased stability at acidic to neutral pH levels, which helps maintain its hydrophilic properties and prevents aggregation or degradation of the particles within the composition.

This pH range also enhances the compatibility of the coating composition with water-based inks, ensuring effective ink absorption of a substrate coated with the coating composition and preventing issues such as ink reticulation or smudging during high-speed printing. Additionally, the controlled pH minimizes the risk of adverse chemical reactions between the components of the composition, such as the polymeric binder, mica particles, and/or wetting agents, thereby preserving the structural integrity and functional properties of the coating composition.

Furthermore, the specified pH range supports the long-term stability of the composition during storage, reducing the likelihood of sedimentation or separation of the components. This ensures consistent application performance and high-quality results, making the coating composition suitable for demanding applications such as wallpapers, labels, and security documents.

Another aspect of the present disclosure provides a sheet for printing comprising: a substrate sheet comprising a first and second main surfaces, and an outer coating layer on at least one of the first and second main surfaces, wherein said outer coating layer comprises the coating composition as disclosed above.

A "sheet" should be understood as an essentially flat object, which comprises two main surfaces and a periphery, the two main surfaces having, at least from a macroscopic point of view, the same area, which is far greater than the area of the periphery. Its main surfaces may have some roughness, or present some relief, e.g. obtained by embossing.

The arrangement of the substrate sheet with the outer coating layer comprising the coating composition enables the sheet to achieve a metallic luster while maintaining compatibility with high-speed inkjet printing using water-based inks. The outer coating layer defined hereabove imparts a metallic luster to the sheet for printing and ensures high printing quality in terms of definition of the printed image, high printing quality in terms of uniformity of the tint of the colored areas, and maintains the metallic luster of the sheet for printing after the printing.

The inclusion of mica particles provides the controlled metallic appearance, while the fumed alumina particles enhance the ink absorption properties of the outer coating layer, ensuring rapid drying and preventing issues such as ink reticulation or smudging. This combination allows for the production of high-definition printed images with uniform color distribution. In particular, the use of fumed alumina improves the metallic luster of the sheet for printing for a given mica content as compared to the use of fumed silica.

The physical interaction between the mica particles and the fumed alumina particles ensures that the metallic luster is preserved after printing, including on the printed areas, which is a significant improvement over existing solutions where the metallic effect is often diminished. Additionally, the fumed alumina particles, due to their fine particle size and hydrophilic nature, fill gaps in the outer coating layer, enhancing the smoothness and glossiness of the surface while maintaining the integrity of the metallic appearance.

Moreover, not only is the printing quality excellent on said outer coating layer, but due at least in part to the inclusion of the fumed alumina and/or binder, as discussed hereabove, the printed image has excellent resistance to moisture and can be washed and/or dipped into water thereby keeping the original appearance and physical parameters. This durability broadens the range of applications for the sheet, including use in environments where moisture resistance is of value.

It should be understood that in some examples, there may be intervening layers between the substrate sheet and the outer coating layer. The outer coating layer may coat one or both of the first and second main surfaces. In some examples, the outer coating layer preferably covers the entirety of the main surfaces, however, in other examples it may also only cover a portion of one or both of the first and second main surfaces, for example forming a pattern.

The substrate sheet may comprise multiple layers, such as, e.g. multiple plies or a single ply. In some examples, a coating layer differing from the outer coating layer may be applied to the substrate sheet.

In some examples, the substrate sheet may comprise at least one fibrous ply. A fibrous ply should be understood to refer to a ply mainly composed of fibers. A fibrous ply may be woven or nonwoven. A fibrous ply may comprise non-fibrous additives. In some examples, said at least one fibrous ply may be nonwoven.

The entanglement of fibers in a nonwoven fibrous material is disordered as opposed to a woven material where it is ordered. The mechanical integrity of a nonwoven fibrous material may be provided by the entanglement of the fibers or by adhesion of the fibers to each other. Paper is thus a specific kind of nonwoven fibrous material.

In some examples, said at least one fibrous ply may comprise cellulose fibers. Cellulose fibers may be of natural origin (e.g. fibers from wood pulp, cotton, linen, hemp, or other types of plant fibers). Cellulose fibers may also be of synthetic origin, such as precipitated from solutions of dissolved cellulose.

In some examples, said at least one fibrous ply further may comprise fibers made of a synthetic polymer. Mixtures of cellulose fibers and fibers made of synthetic polymers may be used to modify the properties of the fibrous ply (mechanical properties, resistance to humidity, etc.).

The substrate sheet may comprise at least one paper ply. In some examples, the substrate sheet may comprise multiple paper plies.

A paper ply refers to a single layer of paper material that can be combined with other layers to form a multi-ply structure. Each ply contributes to the overall thickness, strength, and functionality of the final product. Examples include cardboard which is a specific type of paper with a high grammage. Thus, the paper ply may be a cardboard ply.

In some examples, the substrate sheet may be a wallpaper substrate sheet. Wallpaper should be understood to refer to a sheet of material generally used to cover interior walls within a structure and may comprise adhesive on a surface thereof opposing a surface comprising any texture or design.

The outer coating layer may have a thickness of 5 to 100 µm, for example of 10 to 50 µm. The specified thickness of the outer coating layer allows the coating to provide sufficient coverage of the substrate surface, ensuring a uniform metallic luster while maintaining compatibility with high-speed inkjet printing. This thickness also prevents excessive penetration of the coating into the substrate, which could compromise the ink absorption properties and lead to issues such as smudging or uneven drying during printing.

The thickness of the outer coating layer is measured by measuring the thickness of the substrate sheet with and without the outer coating layer.

The thickness measurements are done according to ISO 534:2005. For example, a Messmer Büchel Digital Micrometer 49-56 can be used to measure the thickness of a set of at least seven individual samples of 10 cm x 10 cm. The thickness is the average of the thicknesses measured for each individual sample of the set. A 1838g load is used for the measurement.

In some examples, the outer coating layer may have a grammage of 5 to 100 g/m², for example of 10 to 50 g/m². The specified grammage of the outer coating layer ensures a controlled balance between the functional and aesthetic properties of the sheet for printing. This grammage provides sufficient material coverage to achieve a uniform metallic luster while maintaining compatibility with high-speed inkjet printing using water-based inks.

A grammage within this range allows the coating layer to effectively incorporate mica particles for a metallic appearance and fumed alumina particles for enhanced ink absorption. This balance prevents issues such as ink reticulation, smudging, or uneven drying, ensuring high-definition printed images with consistent color distribution. Additionally, the controlled grammage minimizes excessive material usage, reducing production costs while maintaining the structural integrity and durability of the coating layer.

This configuration also supports the retention of the metallic luster after printing and provides strong resistance to moisture, making the sheet suitable for applications such as wallpapers, labels, and security documents, where both visual appeal and functional performance are of consequence.

Another aspect of the present disclosure provides a method of manufacturing a sheet for printing comprising the following steps: providing a substrate sheet comprising a first and second main surfaces, coating at least one of the first and second main surfaces with a layer of the coating composition of the present disclosure, and drying the coated layer to obtain the sheet for printing with the dried layer as an outer layer of the sheet for printing.

The method of manufacturing a sheet for printing ensures the production of a high-performance sheet with both aesthetic and functional properties.

The coating step allows the uniform application of the composition, which includes mica particles and fumed alumina particles, onto the substrate. This ensures that the outer layer achieves a consistent metallic luster while maintaining compatibility with high-speed inkjet printing using water-based inks. The drying step solidifies the coating, ensuring that the mica particles provide a reflective and glittering appearance, while the fumed alumina particles enhance ink absorption and prevent issues such as ink reticulation or smudging.

This method also ensures that the outer layer adheres strongly to the substrate, providing mechanical durability and resistance to environmental factors such as moisture and mechanical wear. The resulting sheet retains its metallic luster and structural integrity even after printing and under demanding conditions, such as washing or submersion in water, making it suitable for applications such as wallpapers, labels, and security documents.

Additionally, the method is compatible with various coating techniques, such as bar coating, blade coating, or slot-die coating, allowing for efficient and scalable production. This flexibility supports the manufacturing of high-quality sheets for diverse applications while maintaining cost-effectiveness and production efficiency.

The method used for the coating step is not particularly limited. Any method known to the skilled person can be used. For example, the method of coating may be selected from bar coating, blade coating, and slot-die coating.

Another aspect of the present disclosure comprises a sheet for printing obtainable by the method of manufacturing of the present disclosure.

The present disclosure also provides a printed article comprising the sheet for printing of the present disclosure wherein at least a part of the outer coating layer has been printed on.

The printed article comprising the sheet for printing of the present disclosure, where at least a part of the outer coating layer has been printed on, achieves a combination of high-quality printing and defined metallic luster. The outer coating layer, which includes mica particles and fumed alumina particles, ensures that the metallic appearance is retained even in the printed areas, providing a consistent and reflective finish.

The inclusion of fumed alumina particles enhances the ink absorption properties of the coating layer, allowing for rapid drying and preventing issues such as ink reticulation or smudging during high-speed printing with water-based inks. This ensures that the printed areas exhibit high-definition image quality with uniform color distribution, even under demanding printing conditions.

Additionally, the printed article demonstrates strong resistance to moisture, enabling the printed material to retain its appearance and structural integrity even after exposure to water, such as washing or submersion therein. This durability makes the printed article suitable for applications such as wallpapers, labels, and security documents, where both aesthetic appeal and functional resilience are of consequence.

By enabling the use of water-based inks on a metallic-coated substrate, the printed article provides an environmentally friendly alternative to solvent-based ink systems, broadening its applicability across various printing technologies and industries.

The printed article is not particularly limited and can include a printed publication such as a newspaper or a magazine, a wallpaper, wrapping paper, security documents, or a label. Security documents comprise means of payment, such as a banknote, a check, or a restaurant voucher, identity documents, such as an identity card, a visa, a passport or a driving license, lottery tickets, transport tickets, vignettes or tax stamps, or entry tickets to cultural or sporting events.

The present disclosure also provides a method of printing comprising the following steps: providing the sheet for printing of the present disclosure, and printing the sheet for printing; wherein the printing is performed by inkjet printing using a water-based ink.

The method of printing, which involves providing the sheet for printing of the present disclosure and performing inkjet printing using a water-based ink, ensures high-quality printing results while maintaining the metallic luster of the sheet.

The compatibility of the outer coating layer, comprising mica particles and fumed alumina particles, with water-based inks allows for rapid ink absorption and prevents issues such as ink reticulation, smudging, or uneven drying during high-speed inkjet printing. This ensures that the printed areas exhibit high-definition image quality with sharp edges and uniform color distribution, even under demanding printing conditions.

Additionally, the use of water-based inks provides an environmentally friendly alternative to solvent-based inks, reducing the environmental impact of the printing process. The method also supports the retention of the metallic luster in both printed and unprinted areas, enhancing the visual appeal of the final printed article.

This method is particularly advantageous for applications requiring both aesthetic and functional performance, such as wallpapers, labels, and security documents. It enables efficient and reliable printing on metallic-coated substrates, broadening the range of applications for high-speed inkjet printing technologies. In some examples, the water-based ink may be a latex-free ink. Latex-free ink should be understood to refer to an ink formulations which do not contain polymer nanoparticles as are included in Latex inks.

The use of latex-free water-based ink in the printing process ensures enhanced compatibility with the outer coating layer of the sheet for printing, which comprises mica particles and fumed alumina particles. By avoiding polymer nanoparticles typically found in latex inks, latex-free inks reduce the risk of interference with the hydrophilic properties of the coating layer, allowing for rapid ink absorption and preventing issues such as ink reticulation or smudging during high-speed printing.

Additionally, the absence of latex in the ink formulation minimizes potential environmental and health concerns associated with latex-based products, such as allergenic reactions or challenges in recyclability. This makes the printing process more sustainable and suitable for applications requiring environmentally friendly solutions.

The use of latex-free inks also ensures that the metallic luster of the coating layer is preserved after printing, as the ink formulation does not introduce components that could dull or obscure the reflective properties of the mica particles. This combination of high-quality printing, environmental benefits, and aesthetic appeal makes the method particularly advantageous for applications such as wallpapers, labels, and security documents. The water-based ink may be UV curable. The use of UV-curable water-based ink in the printing process enhances the durability and quality of the printed article. UV-curable inks solidify rapidly upon exposure to ultraviolet light, ensuring faster drying times and reducing the risk of smudging or ink migration during high-speed printing. This rapid curing process also allows for sharper image definition and more precise color distribution, resulting in high-quality printed outputs.

Additionally, UV-curable inks provide excellent adhesion to the outer coating layer, which comprises mica particles and fumed alumina particles, ensuring that the printed areas maintain their integrity and visual appeal over time. The curing process also contributes to the mechanical durability of the printed layer, making it resistant to wear, abrasion, and environmental factors such as moisture.

The compatibility of UV-curable water-based inks with the metallic-coated substrate ensures that the metallic luster of the coating layer is preserved, even in the printed areas. This makes the method particularly suitable for applications requiring both aesthetic appeal and functional performance, such as wallpapers, labels, and security documents. Furthermore, the use of water-based UV-curable inks provides an environmentally friendly alternative to solvent-based systems, reducing the environmental impact of the printing process.

The present disclosure also provides a printed sheet obtainable by the above method of printing of the present disclosure.

### Examples

Table 1 below details the coating compositions tested. The ingredients' contents are given in % dry weight/dry weight. The solids content is given in % w/w relative to the total weight of the composition.

**Table 1**

| Test n° | **1** | **2** | **3** | **4** | **5** | **6** | **7** |
|---|---|---|---|---|---|---|---|
| Binder | 35.8 | 35.9 | 34.5 | 48.8 | 62.1 | 69.2 | 71.6 |
| Fumed alumina | 47.6 | 47.7 | 46.4 | 34.4 | 23.6 | 16.3 | 5.0 |
| mica | 15.7 | 15.7 | 17.5 | 16.1 | 13.5 | 14.1 | 19.4 |
| Wetting agent | 0.9 | 0.7 | 1.7 | 0.7 | 0.8 | 0.4 | 4.0 |
| Total solids content | 38.5 | 37.8 | 36.9 | 39.8 | 41.0 | 42.4 | 45.0 |
| Al/mica | 3.0 | 3.0 | 2.7 | 2.1 | 1.75 | 1.2 | 0.3 |
| Al/binder | 1.3 | 1.3 | 1.3 | 0.7 | 0.4 | 0.2 | 0.1 |
| Printing quality | +++ | +++ | +++ | +++ | - | - | - |

The binder was an acrylic copolymer emulsion.

The mica was natural mica (MICA 100 SILVER WHITE 5156 FMI/14/5156 provided by Steyport).

The wetting agent was a modified silicone.

The printing was done by inkjet printing using water-based inks.

As indicated by the + and - symbols in the table, the printing quality was good for examples 1 to 4 and degraded going from example 5 to 7.

Example 4 gave a good printing quality. However, the sample was slow to dry compared to examples 1 to 3.

Examples 1 to 3 were additionally subjected to two water resistance tests. In the first water resistance test, each of examples 1 to 3 was placed under running water. Each of examples 1 to 3 maintained its original appearance with no image distortion even when rubbed while wet. The examples were then dried. The original appearance stayed intact after drying for each of examples 1 to 3.

In the second water resistance test, each of examples 1 to 3 were submerged in a beaker of water for a period of time greater than seven days. Each of examples 1 to 3 maintained its original appearance after seven days and the printed image stayed intact when rubbed while wet. Each of examples 1 to 3 were then dried. The original appearance stayed intact after drying for each of examples 1 to 3.

## Claims

1. A coating composition comprising
mica particles, and
fumed alumina particles.

2. The coating composition of claim 1, wherein the ratio of the mass of the fumed alumina particles to the mass of the mica particles in the composition is equal to or greater than 2, preferably from 2.25 and to 4, more preferably from 2.5 to 3.5.

3. The coating composition of claim 1 or 2, comprising from 2 to 30% w/w, for example 16 to 30% w/w of mica particles relative to the total dry mass of the coating composition.

4. The coating composition of any one of claims 1 to 3, comprising from 4 to 90% w/w, for example from 30 to 90% w/w of fumed alumina particles relative to the total dry mass of the coating composition.

5. The coating composition of any one of claims 1 to 4, wherein the mica particles have a D10 of equal to or greater than 5 µm and a D90 of equal to or less than 120 µm, preferably a D10 of equal to or greater than 7 µm and a D90 of equal to or less than 100 µm, more preferably a D10 of equal to or greater than 9 µm and a D90 of equal to or less than 70 µm.

6. The coating composition of any one of claims 1 to 5, wherein the fumed alumina particles have a D50 of equal to or less than 0.3 µm, preferably of equal to or less than 0.2 µm, even more preferably of equal to or less than 0.15 µm.

7. The coating composition of any one of claims 1 to 6, further comprising a polymeric binder.

8. The coating composition of claim 7, wherein the ratio of the mass of the fumed alumina particles in the coating composition to the mass of the polymeric binder in the coating composition is equal to or greater than 0.5, preferably from 0.75 to 2.0, more preferably from 1 to 1.5.

9. The coating composition of any one of claims 1 to 8 being devoid of a polyurethane binder.

10. The coating composition of any one of claims 1 to 9, wherein the coating composition further comprises a wetting agent.

11. The coating composition of any one of claims 1 to 10, wherein a pH of the coating composition is from 3 to 7, for example from 4 to 6.5.

12. A sheet comprising:
a substrate sheet comprising a first and second main surfaces, and
an outer coating layer on at least one of the first and second main surfaces,
wherein said outer coating layer comprises the coating composition of any one of claims 1 to 11.

13. The sheet of claim 12, wherein the outer coating layer has a grammage of 5 to 100 g/m2, for example of 10 to 50 g/m2.

14. A printed article comprising the sheet of any one of claims 12 to 13, wherein at least a part of the outer coating layer has been printed on.

15. The printed article of claim 14, wherein the printed article comprises or is a wallpaper.
